# EUROPÄISCHE PATENTSCHRIFT

(11) **EP 3 418 025 B1**
(45) Veröffentlichungstag und Bekanntmachung des Hinweises auf die Patenterteilung: **04.08.2021**
(21) Anmeldenummer: 18178658.3
(22) Anmeldetag: 19.06.2018
(51) Int. Cl.: B29C 45/27, B29C 45/28

(54) **UMLENKVORRICHTUNG ZUR UMLENKUNG EINES SCHMELZEFLUSSES INNERHALB EINER VERTEILERPLATTE**
DEFLECTION DEVICE FOR THE DEFLECTION OF A MELT FLOW WITHIN A DISTRIBUTION PLATE
DISPOSITIF DE DÉVIATION PERMETTANT DE DÉVIER UN FLUX DE MATIÈRE FONDUE À L'INTÉRIEUR D'UNE PLAQUE DE DISTRIBUTION

(30) Priorität: 23.06.2017 DE 102017114051; 14.12.2017 DE 102017130014
(43) Veröffentlichungstag der Anmeldung: 26.12.2018
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- DE-A1- 2 544 879
- JP-A- S59 135 134
- KR-A- 20160 004 689
- US-A- 5 762 976

## Beschreibung

Die Erfindung betrifft eine Umlenkvorrichtung zur Umlenkung eines Schmelzeflusses innerhalb einer Verteilerplatte. Insbesondere bei Spritzgießanlagen werden Verteilerplatten (Heißkanalverteiler) eingesetzt um Spritzgussdüsen eine Schmelze bzw. plastifizierte Masse zuzuleiten.

Verteilerplatten werden aus Dichtigkeitsgründen und wegen der hohen Betriebsdrücke bevorzugt einstückig ausgebildet. Hierbei weisen Verteilerplatten ein Kanalsystem auf, das durch Längs- und Querbohrungen gebildet ist, wodurch sich die plastifizierte Masse von einer Ebene in eine andere Ebene leiten lässt. Die Längs- und Querbohrungen schneiden sich an Kreuzungspunkten. In diesen Kreuzungspunkten und an weiteren Positionen entlang der Bohrungen werden, senkrecht zu der Ebene des Kanalsystems, Ausnehmungen in die Verteilerplatte eingesetzt, die zur Aufnahme von Umlenkvorrichtungen geeignet sind.

Die Umlenkvorrichtungen dienen der Umlenkung des Schmelzeflusses aus der Ebene des in der Verteilerplatte liegenden Kanalsystems in Richtung von Spritzgussdüsen der Spritzgussanlage. Weiterhin dienen die Umlenkvorrichtungen der Begrenzung des Flusses der plastifizierten Masse, beispielsweise in den Randbereichen der Verteilerplatte.

Die Umlenkvorrichtungen weisen zur Umlenkung des Flusses der plastifizierten Masse einen Umlenkkanal auf, der den Schmelzefluss in der Regel von einer horizontalen Richtung des Kanalsystems der Verteilerplatte in eine vertikale Richtung umleitet. Die Umlenkvorrichtungen sind hierbei druckdicht in der Verteilerplatte eingesetzt, sodass die plastifizierte Masse nur an den Öffnungen der Umlenkvorrichtungen aus der Verteilerplatte austritt.

DE 298 16 253 U1 offenbart eine solche Verteilerplatte mit Umlenkstopfen, wobei die Umlenkstopfen zylindrisch ausgebildet sind und in einer unteren Stirnfläche eine derart ausgeformte Ausformung aufweisen, dass ein Schmelzefluss aus einem horizontal verlaufenden Kanal in einen vertikal verlaufenden Kanal umleitbar ist, wobei der horizontal verlaufende Kanal gleichzeitig durch den Stopfen abgedichtet ist. Der Stopfen ist hierbei in einem Winkel gegenüber der horizontalen Ebene des Kanalsystems in die Verteilerplatte eingesetzt.

An dieser Ausgestaltung ist nachteilhaft, dass die Umlenkung des Schmelzeflusses nicht in einem gleichmäßigen Kanal erfolgt. Insbesondere im Übergangsbereich zwischen dem horizontalen und vertikalen Verlauf des Kanals in der Verteilerplatte bildet sich durch die dem Stopfen gegenüberliegende, konstruktiv bedingte, scharfe Kante ein Strömungsschatten aus, der zu einem unvorteilhaften ungleichmäßigen Schmelzefluss führt.

DE 20 2006 018 031 U1 offenbart ebenfalls eine Verteilerplatte mit Umlenkstopfen, wobei die Umlenkstopfen zylindrisch ausgebildet sind und in ihrem Inneren eine Kanalgeometrie, etwa einen umgebogenen Strömungskanal, aufweisen. Die Stopfen sind in das horizontal verlaufende Kanalsystem einsetzbar und ermöglichen durch eine entsprechende Ausgestaltung des umgebogenen Strömungskanals, eine Umlenkung des Schmelzestroms in eine vertikale Richtung.

An dieser Ausgestaltung ist nachteilhaft, dass die Umlenkstopfen einstückig - oder in einer Trennebene verlötet - ausgebildet sind. Eine einstückige Ausbildung der Umlenkstopfen erfordert beispielsweise eine mehrstufige Bearbeitung durch mehrfaches Ansetzen von Werkzeugen, etwa Bohrwerkzeugen. Hierbei entstehen ungleichmäßige Oberflächen in dem Strömungskanal, wodurch die Entstehung von Strömungsschatten begünstigt wird. Eine entsprechende Nachbearbeitung solcher einstückigen Umlenkstopfen mit komplexen Umlenkkanalgeometrien ist aufwendig.

JP S59 135134 A offenbart eine Umlenkvorrichtung bzw. einen Umlenkstopfen, zur Umlenkung eines Schmelzeflusses in einer Verteilerplatte einer Spritzgussanlage, mit einem Grundkörper, wobei innerhalb des Grundkörpers ein Umlenkkanal angeordnet ist. Der Grundkörper weist eine Trennfläche auf, die den Grundkörper in eine erste Körperhälfte und in eine zweite Körperhälfte aufteilt, wobei die erste Körperhälfte und die zweite Körperhälfte fest miteinander verbindbar sind.

US 5 762 976 A und KR 2016 0004689 A offenbaren ebenfalls Ausführungsformen einer solchen Umlenkeinrichtung. Ausgehend vom zuvor beschriebenen Stand der Technik ist es die Aufgabe der vorliegenden Erfindung, eine alternative und verbesserte Lösung zum Umleiten des Schmelzeflusses in einem Heißkanalverteiler zu schaffen und die bestehenden Nachteile des Stands der Technik zu beseitigen. Weiterhin ist es die Aufgabe der Erfindung, ein Verfahren zur Herstellung einer solchen Umlenkvorrichtung bereit zu stellen.

Diese Aufgabe wird gemäß der vorliegenden Erfindung durch die Vorrichtung nach Anspruch 1 und durch das Verfahren nach Anspruch 13 gelöst. Die abhängigen Ansprüche beziehen sich auf individuelle Ausgestaltungen der erfindungsgemäßen Lösung.

Die vorliegende Erfindung schafft eine Umlenkvorrichtung, zur Umlenkung eines Schmelzeflusses in einer Verteilerplatte einer Spritzgussanlage, mit einem Grundkörper wobei innerhalb des Grundkörpers ein Umlenkkanal angeordnet ist, wobei der Grundkörper eine Trennfläche aufweist, die den Grundkörper in eine erste Körperhälfte und in eine zweite Körperhälfte aufteilt, wobei die erste Körperhälfte und die zweite Körperhälfte fest miteinander verbindbar sind, und wobei erfindungsgemäß die Körperhälften parallel zur Trennfläche liegende Oberflächen aufweisen, wobei in die Oberflächen jeweils mindestens eine Einsenkung eingebracht ist.

Der zweigeteilte Grundkörper ist besonders vorteilhaft, da die Umlenkvorrichtung auf diese Weise leicht reinigbar ist. Insbesondere bei einem Werkzeugwechsel ist die Umlenkvorrichtung aus einer Verteilerplatte einer Spritzgussanlage entnehmbar. Der Grundkörper der Umlenkvorrichtung ist entlang der Trennfläche auftrennbar, wodurch der Kanal zumindest abschnittsweise zugänglich ist. Die feste Verbindung der Körperhälften stellt sicher, dass die erste und die zweite Körperhälfte sich nicht gegeneinander verschieben. Dadurch, dass eine feste Verbindung zwischen der ersten Körperhälfte und der zweiten Körperhälfte vorgesehen ist, ist die Umlenkvorrichtung zudem insbesondere unter hohen Betriebsdrücken, die in Spritzgussanlagen herrschen, dicht. Auf diese Weise ist ein abgedichteter Betrieb der Verteilerplatte mit einer oder mehreren Umlenkvorrichtungen sichergestellt. Durch das Vorsehen einer Trennfläche in dem Grundkörper ist eine Innengeometrie des Grundkörpers, wie beispielsweise der Umlenkkanal, in besonders vorteilhafter Weise entlang der Trennfläche in der jeweiligen Stopfenhälfte frei gestaltbar. Somit ist die Schmelze innerhalb der Umlenkvorrichtung durch eine entsprechende Ausgestaltung des Umlenkkanals schonend führbar, ohne, dass der Schmelzefluss an scharfen Kanten innerhalb des Umlenkkanals behindert, gestört oder beeinflusst wird.

Dadurch, dass die Körperhälften parallel zur Trennfläche liegende Oberflächen aufweisen, wobei in die Oberflächen jeweils mindestens eine Einsenkung eingebracht ist, ist die Auflagefläche der beiden Körperhälften vermindert. Auf diese Weise ist ein erhöhter Anpressdruck der Körperhälften zueinander herstellbar. Durch derartig ausgestaltete Auflageflächen wird die Dichtigkeit der Umlenkvorrichtung durch die erhöhte Flächenpressung deutlich erhöht.

Vorzugsweise ist vorgesehen, dass der Umlenkkanal in der Trennfläche verläuft. Insbesondere ist dies für die Reinigung der Umlenkvorrichtung vorteilhaft, da der Umlenkkanal nach einer Teilung des Grundkörpers entlang der Trennfläche in den Körperhälften freiliegt. Außerdem gestaltet sich diese Ausprägung der Erfindung hinsichtlich der Herstellung der Umlenkvorrichtung vorteilhaft, da nach dem Herstellen der Körperhälften der Umlenkkanal durch entsprechende Verfahren, beispielsweise zerspanende CNC-Verfahren, in einer nahezu beliebigen Geometrie in die Körperhälften und somit in den Grundkörper einbringbar ist. Hierbei werden Rauheitswerte erreicht, die beispielsweise mittels Lasersintern oder 3D-Druck technisch nicht erzielbar sind. Insbesondere ist der Kanal, durch dessen Verlauf innerhalb der Trennfläche, derart ausgestaltbar, dass durch dessen Geometrie keine Strömungsschatten in der plastifizierten Masse erzeugt werden. Bevorzugterweise ist diesbezüglich auch vorgesehen, dass eine Mittelachse des Grundkörpers in der Trennfläche liegt.

Besonders bevorzugter Weise ist vorgesehen, dass der Umlenkkanal einen vertikalen Abschnitt aufweist, der im Wesentlichen parallel zu der Mittelachse verläuft und der Umlenkkanal einen radialen Abschnitt aufweist, der im Wesentlichen senkrecht zu der Mittelachse verläuft. Durch das Vorsehen des vertikalen Abschnitts und des radialen Abschnitts ergibt sich eine Umlenkkanalgeometrie, die insbesondere für die Umlenkung von plastifizierter Masse in Verteilerplatten von Spritzgussanlagen vorteilhaft ist. Der Strom der plastifizierten Masse ist somit aus einer Kanalebene der Verteilerplatte durch den radialen Abschnitt in die Umlenkvorrichtung aufnehmbar und entlang des Umlenkkanals in die vertikale Richtung des vertikalen Abschnitts überführbar. Der Strom der plastifizierten Masse ist somit von dort aus vorteilhafterweise einer Spritzgussdüse zuführbar, die senkrecht zu der Kanalebene der Verteilerplatte liegt.

Eine besonders zweckmäßige Ausführungsform sieht vor, dass der Umlenkkanal zwischen dem vertikalen Abschnitt und dem radialen Abschnitt einen Kurvenabschnitt aufweist. Durch das Vorsehen eines Kurvenabschnitts ist sichergestellt, dass der Umlenkkanal keine Knicke aufweist, die Strömungsschatten in dem Schmelzefluss hervorrufen.

Eine bevorzugte Weiterbildung sieht vor, dass eine Verschlussnadeldurchführung konzentrisch zu der Mittelachse des Grundkörpers verläuft und mit dem vertikalen Abschnitt des Umlenkkanals verbunden ist. Durch das Vorsehen einer Verschlussnadeldurchführung, die eine Verbindung zu dem vertikalen Abschnitt des Umlenkkanals aufweist, ist eine Verschlussnadel durch den Grundkörper durchführbar und beispielsweise mit dem Kanalende einer Spritzgussdüse in Eingriff bringbar um diese zu verschließen. Weiterhin ist besonders zweckmäßig, dass die Verschlussnadeldurchführung eine Anschlussgeometrie für ein Dichtelement aufweist. Durch das Vorsehen eines Dichtelements ist der Grundkörper der Umlenkvorrichtung im Bereich der Verschlussnadeldurchführung abdichtbar. Dadurch ergibt sich vorteilhafterweise eine abgedichtete Fahrweise von Spritzgussanlagen, die Spritzgussdüsen mit Verschlussnadeln in Verbindung mit der Umlenkvorrichtung aufweisen.

Erfindungsgemäß ist vorgesehen, dass von der Trennfläche aus gesehen, die erste Körperhälfte Durchgangslöcher aufweist und die zweite Körperhälfte Sacklöcher aufweist, wobei die Durchgangslöcher und die Sacklöcher im Bereich der Einsenkungen liegen und wobei der Umlenkkanal nicht im Bereich der Einsenkungen liegt. Dadurch, dass die Sacklöcher und die Durchgangslöcher im Bereich der Einsenkungen liegen, ist sichergestellt, dass etwaige Undichtigkeiten durch die Löcher lediglich den Bereich der Einsenkungen betreffen. Insbesondere dadurch, dass der Umlenkkanal nicht im Bereich der Einsenkungen liegt, ist vorteilhafterweise sichergestellt, dass der Umlenkkanal gegenüber den Einsenkungen abgedichtet ist. Bevorzugter Weise ist zudem vorgesehen, dass die Verschlussnadeldurchführung nicht im Bereich der Einsenkungen liegt. Auf diese Weise ist sichergestellt, dass die Verschlussnadeldurchführung ebenfalls gegenüber den Einsenkungen abgedichtet ist. Außerdem ist dadurch, dass die Einsenkungen nicht im Bereich des Umlenkkanals und/oder der Verschlussnadeldurchführung liegen, sichergestellt, dass um den Umlenkkanal und die Verschlussnadeldurchführung ein abdichtender Bereich vorhanden ist, in dem die Oberflächen der Körperhälften aufeinander zu liegen kommen.

Eine besonders zweckmäßige Ausführungsform sieht vor, dass die Durchgangslöcher der ersten Körperhälfte im Wesentlichen senkrecht zu der Trennfläche verlaufen und die Sacklöcher der zweiten Körperhälfte im Wesentlichen senkrecht zu der Trennfläche verlaufen, wobei die Sacklöcher ein Innengewinde aufweisen. Die Sacklöcher können alternativ auch als Durchgangslöcher ausgebildet sein. Diese Ausführungsform ist vorteilhaft, da die Körperhälften auf diese Weise mittels Schraubbolzen verschraubbar sind. Die Schraubbolzen sind hierbei durch die Durchgangslöcher führbar, wobei sie mit den Innengewinden der Sacklöcher in Eingriff bringbar sind. Eine bevorzugte Weiterbildung sieht vor, dass die Durchgangslöcher an einer Außenseite des Grundkörpers einen erhöhten Durchmesser aufweisen. Hierbei ergibt sich der Vorteil, dass Schraubenköpfe der Schraubbolzen in den Bereich der Durchgangslöcher einbringbar sind, der einen erhöhten Durchmesser aufweist, wobei die Schraubenköpfe so weit in diesen Bereich einbringbar sind, dass sie nicht über den Grundkörper hinaus überstehen. Weiterhin ist durch den erhöhten Durchmesser eine Auflagefläche für die der ersten Oberfläche der ersten Körperhälfte zugewandte Seite der Schraubenköpfe geschaffen, an der die erste Körperhälfte gegen die zweite Körperhälfte verspannbar ist. In einer Ausführungsform ist daher vorgesehen, dass die erste Körperhälfte und die zweite Körperhälfte mittels Schraubbolzen, die durch die Durchgangslöcher der ersten Körperhälfte verlaufen und in den Sacklöchern der zweiten Körperhälfte verschraubt sind, verbindbar sind.

Eine weitere bevorzugte Ausführungsform sieht vor, dass die erste Körperhälfte und die zweite Körperhälfte, von der Trennebene aus gesehen, im Wesentlichen senkrecht zu der Trennfläche ausgerichtete Zentrierlöcher aufweisen, wobei zwischen den Körperhälften in den Zentrierlöchern Zentrierstifte anordenbar sind. Insbesondere gestaltet sich dies vorteilhaft, da durch die Zentrierlöcher und die Zentrierstifte die Körperhälften definiert zueinander ausrichtbar sind.

Weiterhin ist besonders zweckmäßig, dass der Grundkörper an einer ersten Seite einen Flansch aufweist. Durch das vorteilhafte Vorsehen eines Flansches ist der Grundkörper an einer Verteilerplatte festlegbar. Der Flansch dient hierbei als Anschlag für eine exakte Positionierung der Umlenkvorrichtung in der Verteilerplatte. Besonders bevorzugt ist hierbei, dass im Ansatzbereich des Flansches eine um den Grundkörper und an dem Flansch in Umfangsrichtung des Grundkörpers verlaufende Nut vorhanden ist. Durch die in Umfangsrichtung verlaufende Nut ist die Umlenkvorrichtung im Anschlagsbereich von dem Anschlagsgegenstand, etwa einer Verteilerplatte, beabstandet. Insbesondere die Montage und die Demontage der Umlenkvorrichtung wird dadurch erleichtert.

In einer optionalen Ausführungsform ist vorgesehen, dass der Grundkörper an einer ersten Seite einen Flansch aufweist und der Flansch eine Anschlagfläche zur Anlage der Umlenkvorrichtung an einer Verteilerplatte aufweist.

Durch die definierte Anschlagfläche, die optional vorgesehen ist, ist es möglich, den Grundkörper bzw. die Umlenkvorrichtung auf ein definiertes Maß beispielsweise in eine Verteilerplatte einzupressen. Außerdem ist dadurch sichergestellt, dass der Umlenkkanal beispielsweise stets mit korrespondierenden Kanälen in der Verteilerplatte fluchtet. In einer bevorzugten Ausführungsform ist die Anschlagfläche auf einer der ersten Seite gegenüberliegenden Seite des Flansches angeordnet. Dies ist insbesondere dann vorteilhaft, wenn der Grundkörper in eine Verteilerplatte eingepresst wird. In diesem Fall werden die Übergänge zwischen Verteilerplatte und Stopfen exakt eingehalten, sodass ein fluchtender Übergang gegeben ist.

In einer weiteren Ausführungsform ist vorgesehen, dass der Grundkörper eine zylindrische Form aufweist. Durch die zylindrische Form des Grundkörpers ergibt sich der Vorteil, dass die Umlenkvorrichtung besonders einfach herstellbar ist. Dies gilt gleichermaßen auch für die Verteilerplatte, in der die Umlenkvorrichtung eingeordnet ist. Auf diese Weise lässt sich die Umlenkvorrichtung kostengünstig herstellen.

Eine weitere vorteilhafte Ausgestaltung der Erfindung sieht vor, dass der Grundkörper eine konische Form aufweist. Insbesondere kann vorgesehen sein, dass die konische Form derart ausgebildet ist, dass der Durchmesser des Grundkörpers von der ersten Seite her in Richtung einer zweiten Seite abnimmt. Der Grundkörper weist also eine in Richtung der zweiten Seite zulaufende Konizität auf. Durch eine konische Form des Grundkörpers ist dieser besonders einfach in die Verteilerplatte einsetzbar. Daher ist der Grundkörper bevorzugt derart konisch ausgebildet, dass der Grundkörper in eine in die Verteilerplatte hineinzeigende Richtung konisch zulaufend ausgebildet ist.

Vorzugsweise ist vorgesehen, dass der Grundkörper ein Material aufweist, das einen positiven Wärmeausdehnungskoeffizienten hat. Durch einen positiven Wärmeausdehnungskoeffizienten ist die Umlenkvorrichtung vorteilhafterweise in einer Verteilerplatte fest einsetzbar, sofern die Verteilerplatte ein Material mit einem geringeren Wärmeausdehnungskoeffizienten aufweist. Je höher die Betriebstemperatur der Spritzgussanlage ist, desto dichter ist die Verbindung zwischen Umlenkvorrichtung und Verteilerplatte Zudem sind die Körperhälften durch die Presspassung, die aufgrund der unterschiedlichen Wärmeausdehnungskoeffizienten entsteht, bei einer erhöhten Temperatur der Verteilerplatte und des Stopfens fest miteinander verbunden. Durch einen Temperaturanstieg während des Betriebs in Spritzgussanlagen ist eine Materialausdehnung des Grundkörpers erreichbar, wodurch eine Presspassung des Grundkörpers mit der Verteilerplatte der Spritzgussanlage ausbildbar ist. Bevorzugt ist hierfür der Wärmeausdehnungskoeffizient des Grundkörpers größer als der Wärmeausdehnungskoeffizient der Verteilerplatte.

In einer weiteren Ausgestaltung der Umlenkvorrichtung ist vorgesehen, dass der Grundkörper und die Verteilerplatte jeweils ein Material aufweisen, das einen ähnlichen Wärmeausdehnungskoeffizienten hat. In einer Weiterbildung kann zudem vorgesehen sein, dass der Grundkörper und die Verteilerplatte jeweils ein Material aufweisen, das einen gleichen oder nahezu identischen Wärmeausdehnungskoeffizienten hat. Bevorzugt weisen der Grundkörper und die Verteilerplatte das gleiche Material auf. Ein eine deutlich geringere Temperatur als die Verteilerplatte aufweisender Grundkörper mit Übermaß ist hierbei in die Verteilerplatte in vorteilhafter Weise leicht einsetzbar. Auf diese Weise ist eine Presspassung zwischen dem Grundkörper und der Verteilerplatte ausbildbar, sofern die Verteilerplatte und der Grundkörper eine im Wesentlichen ähnliche Temperatur aufweisen. Durch das Vorsehen einer Presspassung zwischen dem Grundkörper und der Verteilerplatte sind die beiden Körperhälften fest miteinander verbindbar. Sofern der Grundkörper gegenüber der Verteilerplatte kein Übermaß aufweist, ist der Grundkörper stets leicht in die Verteilerplatte einsetzbar und demontierbar.

In einer weiteren Ausgestaltung der Umlenkvorrichtung ist vorgesehen, dass der Wärmeausdehnungskoeffizient des Materials des Grundkörpers größer ist, als der Wärmeausdehnungskoeffizient des Materials der Verteilerplatte. Auf diese Weise ist vorteilhaft dann zwischen dem Grundkörper und der Verteilerplatte eine Presspassung herstellbar, wenn beide die Verteilerplatte und der Grundkörper erhitzt werden. Dies ist regelmäßig dann gegeben, wenn die Spritzgussanlage in Betrieb ist. Wenn die Spritzgussanlage, etwa zu Wartungs- und/oder Reinigungszwecken außer Betrieb ist, besteht die Presspassung in vorteilhafter Weise nicht, sodass der Grundkörper von der Verteilerplatte trennbar ist.

Weiterhin betrifft die Erfindung ein Verfahren zur Herstellung der Umlenkvorrichtung. Hierbei umfasst das Verfahren zur Herstellung mindestens einer Umlenkvorrichtung die folgenden Verfahrensschritte zur Bearbeitung eines Rohlings mit einer Bearbeitungsfläche:
▪ Einbringen einer Umlenkkanalstruktur in die Bearbeitungsfläche des Rohlings;
▪ Planieren der Bearbeitungsfläche;
▪ Zerteilen des Rohlings entlang mindestens einer Trennungsebene in mindestens ein erstes Rohlingsteilstück und mindestens ein zweites Rohlingsteilstück;
▪ Bearbeiten der Rohlingsteilstücke zur Herstellung der Außenseite des die Körperhälften aufweisenden Grundkörpers an den Seiten, die der Bearbeitungsfläche abgewandt sind.

Durch das Vorsehen einer Trennungsebene in dem Rohling sind beide Rohlingsteilstücke und die durch die Bearbeitung entstehenden Körperhälften hinsichtlich der Bearbeitung der Oberflächen der beiden Körperhälften je Bearbeitung in einem Arbeitsschritt in einer dafür vorgesehenen Spannung herstellbar. Es müssen also nicht je Rohlingsteilstück bzw. Körperhälfte separate Bearbeitungen der Bearbeitungsflächen bzw. Oberflächen vorgenommen werden. Dadurch, dass der Rohling in die Rohlingsteilstücke entlang der mindestens einen Trennungsebene zerteilt wird, ergibt sich für die Umlenkkanalstruktur, sofern sie durch die Trennungsebene verläuft, eine besonders präzise Ausrichtung hinsichtlich deren Lage. Insbesondere die Positionierung der Umlenkkanalstruktur in dem Auftrennungsbereich innerhalb der Rohlingsteilstücke lässt sich durch die Auftrennung entlang der Trennebene für die entstehenden Rohlingsteilstücke übereinstimmend realisieren. Somit ist die Herstellung von, in Relation zu dem jeweils anderen Rohlingsteilstück, besonders genau ausgerichteten Strukturen in den Bearbeitungsflächen der Rohlingsteilstücke realisierbar. Durch die Auftrennung der Rohlingsteilstücke können weitere Bearbeitungsschritte, beispielsweise an Flächen, die nicht die Bearbeitungsfläche des Rohlings sind, durchgeführt werden. Durch die separate Bearbeitung der Rohlingsteilstücke können vorzugsweise je Rohlingsteilstück unterschiedliche Bearbeitungen ausgeführt werden.

Eine Weiterbildung des Verfahrens sieht vor, dass die Umlenkkanalstruktur entlang mindestens einer Trennungsebene, die senkrecht zu der Bearbeitungsfläche steht, spiegelsymmetrisch in die Bearbeitungsfläche des Rohlings eingebracht wird.

Durch das spiegelsymmetrische Einbringen ergibt sich der Vorteil, dass die Rohlingsteilstücke, die durch die Trennung des Rohlings entlang der Trennungsebene entstehen, eine deckungsgleiche Umlenkkanalstruktur aufweisen, wenn sie mit den Bearbeitungsflächen zueinander ausgerichtet werden. Insbesondere ist so ein Umlenkkanal herstellbar, der jeweils eine Umlenkkanalhälfte in einer der Rohlingsteilstücke aufweist.

Eine bevorzugte Weiterbildung des Verfahrens sieht vor, dass die Umlenkkanalstruktur derart in die Bearbeitungsfläche des Rohlings eingebracht wird, dass sie entlang einer zweiten Trennungsebene, die eine Drehspiegelebene ist und senkrecht auf der ersten Trennungsebene steht, drehspiegelsymmetrisch eingebracht ist.

Durch das vorsehen einer drehspiegelsymmetrisch ausgebildeten Umlenkkanalstruktur mit zwei Trennungsebenen ist der Rohling in besonders vorteilhafter Weise zur Herstellung von vier Rohlingsteilstücken verwendbar, wobei jeweils zwei Rohlingsteilstücke ein Rohlingsteilstückpaar bilden, das deckungsgleiche Umlenkkanalstrukturen aufweist, wenn es mit den Bearbeitungsflächen zueinander ausgerichtet wird.

Eine besonders bevorzugte Weiterbildung des Verfahrens sieht vor, dass Einsenkungen derart in die Bearbeitungsfläche des Rohlings eingebracht werden, dass die Einsenkungen entlang mindestens einer Trennungsebene, die senkrecht zu der Bearbeitungsfläche steht, spiegelsymmetrisch in den Rohling eingebracht sind.

Durch das spiegelsymmetrische Einbringen ergibt sich der Vorteil, dass die Rohlingsteilstücke, die durch die Trennung des Rohlings entlang der Trennungsebene entstehen, deckungsgleiche Einsenkungen aufweisen, wenn sie mit den Bearbeitungsflächen zueinander ausgerichtet werden. Insbesondere sind so Dichtflächen herstellbar, die nicht im Bereich der Einsenkungen liegen, wobei eine stets ausreichende Flächenpressung zwischen den Dichtflächen erzielt wird.

Alternativ ist für das Verfahren vorgesehen, dass Bohrungen derart in die Bearbeitungsfläche des Rohlings eingebracht werden, dass die Bohrungen entlang mindestens einer Trennungsebene, die senkrecht zu der Bearbeitungsfläche steht, spiegelsymmetrisch in den Rohling eingebracht sind, wobei die Bohrungen die Durchgangslöcher und die Sacklöcher bilden.

Besonders bevorzugt ist weiterhin für das Verfahren vorgesehen, dass die Bohrungen im Bereich von Einsenkungen eingebracht werden. Außerdem ist in einer bevorzugten Weiterbildung des Verfahrens vorgesehen, dass die Sacklöcher in einem weiteren Verfahrensschritt mit Innengewinden versehen werden.

Durch das spiegelsymmetrische Vorsehen der Bohrungen sind die Bohrungen vorteilhafterweise deckungsgleich, wenn die Rohlingsteilstücke mit den Bearbeitungsflächen zueinander ausgerichtet werden. Durch das Vorsehen von Innengewinden in den Sacklöchern ist dadurch ein weiterer Vorteil gegeben, dass Rohlingsteilstücke bzw. Körperhälfte, mittels geeigneter Spannmittel, wie beispielsweise Schraubbolzen, die durch die Durchgangslöcher durchgeführt werden und in die deckungsgleichen Sacklöcher mit Innengewinde eingreifen, verspannbar sind. Durch das vorteilhafte Einbringen von Bohrungen im Bereich von Einsenkungen werden Dichtflächen, die sich zwischen den Einsenkungen befinden nicht durch Bohrungen beeinträchtigt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine schematische Explosionsdarstellung der Umlenkvorrichtung in einer perspektivischen Ansicht,
- Fig. 2: die erste Körperhälfte in einer schematischen, perspektivischen Ansicht,
- Fig. 3: die zweite Körperhälfte in einer schematischen, perspektivischen Ansicht,
- Fig. 4: den Rohling, der für das Verfahren zur Herstellung der Umlenkvorrichtung benutzt wird in einer Draufsicht,
- Fig. 5: den Rohling, der für das Verfahren zur Herstellung der Umlenkvorrichtung benutzt wird in einer perspektivischen Ansicht,
- Fig. 6: eine schematische Darstellung einer konischen Ausführungsform der Umlenkvorrichtung in einer perspektivischen Ansicht und
- Fig. 7: eine schematische, geschnittene Ansicht der in eine Verteilerplatte eingesetzten konischen Ausführungsform der Umlenkvorrichtung.

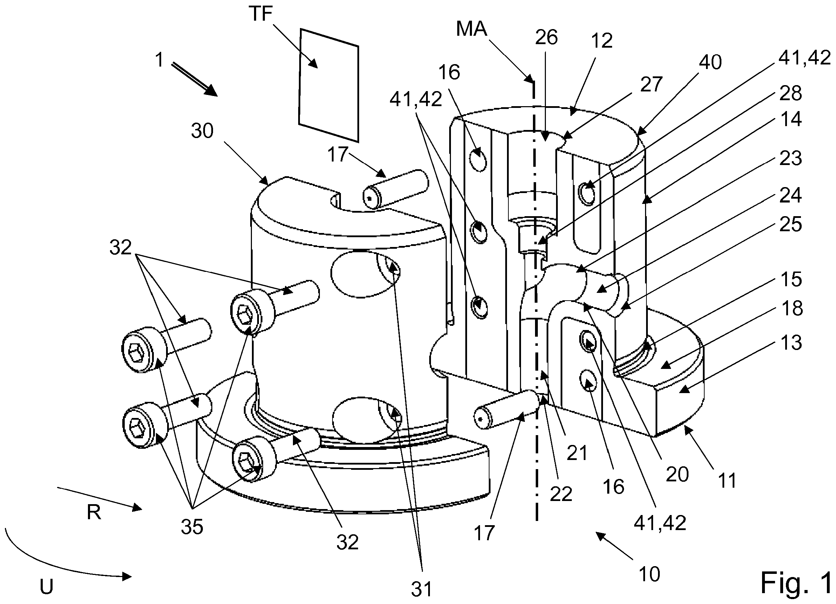

Figur 1 zeigt die Umlenkvorrichtung 1. Die Umlenkvorrichtung 1 weist einen Grundkörper 10 auf. Der Grundkörper 10 hat eine im Wesentlichen zylindrische Form mit einer ersten Seite 11 und einer zweiten Seite 12. Der Grundkörper 10 ist entlang einer Trennfläche TF getrennt dargestellt, wobei eine Mittelachse MA des Grundkörpers 10 in der Trennfläche TF verläuft. Der Grundkörper 10 weist zudem an seiner ersten Seite 11 einen Flansch 13 auf. Der Flansch 13 erstreckt sich im Wesentlichen senkrecht zu der Mittelachse MA. In einem Anschlussbereich des Flansches 13 an einer Außenseite 14 des Grundkörpers 10 weisen die Außenseite 14 und der Flansch 13 eine in Umfangsrichtung U verlaufende Nut 15 auf, die in einer Anschlagfläche 18 liegt.

Durch die Anschlagfläche 18 ist die Umlenkvorrichtung 1 in eine Verteilerplatte bündig einsetzbar. Durch die definierte Anschlagfläche 18 an einer der zweiten Seite zugewandten Fläche des Flansches 13 wird eine definierte Eintauchtiefe der Umlenkvorrichtung 1 in die Verteilerplatte erreicht. Übergänge zwischen der Umlenkvorrichtung 1 und der Verteilerplatte werden somit vermieden.

Der Grundkörper 10 weist weiterhin einen Umlenkkanal 20 mit einem vertikalen Abschnitt 21 auf, der sich von einer ersten Öffnung 22 in ersten Seite 11 des Grundkörpers 10 parallel, besonders bevorzugt konzentrisch, zu der Mittelachse MA erstreckt. Der vertikale Abschnitt 21 geht in einen Kurvenabschnitt 23 über, der in einen radialen Abschnitt 24 übergeht. Der radiale Abschnitt 24 verläuft senkrecht zu der Mittelachse MA in einer radialen Richtung R und schneidet die Außenseite 14 des Grundkörpers 10 mit einer zweiten Öffnung 25. Der Umlenkkanal 20 liegt parallel zu der Trennfläche TF des Grundkörpers 10. Die zweite Öffnung 25 kann an der Außenseite 14 des Grundkörpers 10 eine Fase aufweisen, wodurch Ausrichtungsfehler zwischen dem Grundkörper 10 und der zweiten Öffnung 25 entsprechenden Kanälen einer Verteilerplatte, in die der Grundkörper 10 einsetzbar ist, ausgleichbar sind. Dadurch werden zudem Hinterschnitte zwischen dem Grundkörper 10 und der Verteilerplatte vermieden.

Weiterhin weist der Grundkörper 10 eine Verschlussnadeldurchführung 26 auf, die sich von der zweiten Seite 12 durch eine dritte Öffnung 27 parallel zur Mittelachse MA in Richtung des vertikalen Abschnitts 21 des Umlenkkanals 20, besonders bevorzugt konzentrisch zur Mittelachse MA, erstreckt. Die Verschlussnadeldurchführung 26 schneidet den Umlenkkanal 20. Die Verschlussnadeldurchführung 26 weist weiterhin eine Anschlussgeometrie 28 auf, mittels derer die ein Dichtelement an den Grundkörper 10 anschließbar ist. Die Verschlussnadeldurchführung 26 liegt mit dem Umlenkkanal 20 in der Trennfläche TF. Entlang der Trennfläche TF ist der Grundkörper 10 in eine erste Körperhälfte 30 und in eine zweite Körperhälfte 40 getrennt.

Die Körperhälften 30, 40 des Grundkörpers 10 sind miteinander verbindbar. Der Grundkörper 10 weist hierfür ein Material auf, das einen positiven Wärmeausdehnungskoeffizienten hat. Durch den positiven Wärmeausdehnungskoeffizienten erfolgt bei einer Erhöhung der Temperatur eine Volumenzunahme des Materials, wodurch der Grundkörper 10 in einer entsprechenden Ausformung einer Verteilerplatte eine Presspassung ausbildet. Zur Ausbildung der Presspassung ist der Wärmeausdehnungskoeffizient des Grundkörpers 10 größer als der Wärmeausdehnungskoeffizient der Verteilerplatte.

In einer weiteren Ausführungsform kann vorgesehen sein, dass der Grundkörper 10 und die Verteilerplatte denselben Wärmeausdehnungskoeffizienten aufweisen oder der Grundkörper 10 einen größeren Wärmeausdehnungskoeffizienten als die Verteilerplatte aufweist. Hierbei wird die Presspassung durch eine Erwärmung der Verteilerplatte und ein anschließendes Einsetzen des Grundkörpers 10, der eine deutlich niedrigere Temperatur als die Verteilerplatte aufweist, in eine entsprechende Ausnehmung der Verteilerplatte ausgebildet. Hierdurch wird der Grundkörper 10 in die Verteilerplatte eingeschrumpft. Gleichermaßen kann ebenfalls der Grundkörper 10 gegenüber der Verteilerplatte abgekühlt werden. Hierbei wird die Presspassung durch den Temperaturausgleich und die damit verbundene Ausdehnung des Grundkörpers 10 erreicht.

Alternativ kann vorgesehen sein, dass der Grundkörper 10 und die Verteilerplatte jeweils ein Material aufweisen, das im Wesentlichen denselben Wärmeausdehnungskoeffizienten aufweist. In diesem Fall ist der Grundkörper 10 bzw. die Umlenkvorrichtung 1 stets leicht aus der Verteilerplatte herausnehmbar bzw. darin einsetzbar.

Weiterhin sind zwischen der ersten Körperhälfte 30 und der zweiten Körperhälfte 40 Zentrierstifte 17 angeordnet, die mit korrespondierenden Zentrierlöchern 16 der ersten Körperhälfte 30 und der zweiten Körperhälfte 40 in Eingriff bringbar sind. Die Zentrierlöcher 16 sind hierbei als Kernlöcher ausgebildet. Die Ausgestaltung der Verbindung der Körperhälften 30, 40 des Grundkörpers 10 mittels der temperaturabhängigen Presspassung und mittels der Zentrierstifte 17 stellt eine erste Ausführungsform bezüglich der Verbindung der Körperhälften 30, 40 dar.

Gemäß einer weiteren Ausführungsform sind Schraubbolzen 32 von der Außenseite 14 durch Durchgangslöcher 31 der ersten Körperhälfte 30 führbar, wobei die Schraubbolzen 32 in Sacklöchern 41 der zweiten Körperhälfte 40 einschraubbar sind, wobei die Sacklöcher 41 der zweiten Körperhälfte 40 mit den Durchgangslöchern 31 der ersten Körperhälfte 30 hinsichtlich ihrer Lage im Grundkörper 10 korrespondieren. Zur Herstellung einer Verbindung der beiden Körperhälften 30, 40 mittels der Schraubbolzen 32 weisen die Sacklöcher 41 jeweils ein Innengewinde 42 auf.

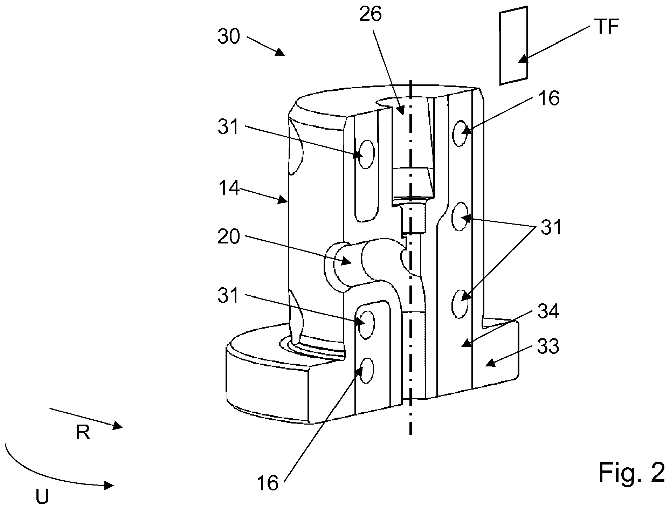

Die Verschraubung der Körperhälften 30, 40 kann alternativ gemeinsam mit der temperaturabhängigen Presspassung und den Zentrierstiften eine weitere Ausgestaltung der Verbindung der beiden Körperhälften 30, 40 bilden. Figur 2 zeigt die erste Körperhälfte 30 des Grundkörpers 10 mit dem entlang der Trennfläche TF aufgetrennten Umlenkkanal 20 und der aufgetrennten Verschlussnadeldurchführung 26. Die erste Körperhälfte 30 weist eine parallel zur Trennfläche TF verlaufende erste Oberfläche 33 auf, in die ersten Einsenkungen 34 eingebracht sind. Die ersten Einsenkungen 34 liegen in Bereichen in denen, von der ersten Oberfläche 33 aus gesehen, die Durchgangslöcher 31 und die Zentrierlöcher 16 in die erste Körperhälfte 30 eingebracht sind. Die ersten Einsenkungen 34 umfassen Bereiche, die weder die Ränder des Umlenkkanals 20 oder der Verschlussnadeldurchführung 26 schneiden. Zwischen den ersten Einsenkungen 34 und dem Umlenkkanal 20 und der Verschlussdurchführung 26 ist somit ein, gegenüber den ersten Einsenkungen 34, erhöhter Bereich der ersten Oberfläche 33 vorhanden. Die Durchgangslöcher 31 weisen im Bereich der Außenseite 14 des Grundkörpers 10 einen erhöhten Durchmesser auf, sodass ein Schraubenkopf 35 eines Schraubbolzens 32 im jeweiligen Durchgangsloch 31 einen Anschlag findet, wobei der Schraubenkopf 35 in einem montierten Zustand - radial gesehen - nicht über den Grundkörper 10 hinaussteht.

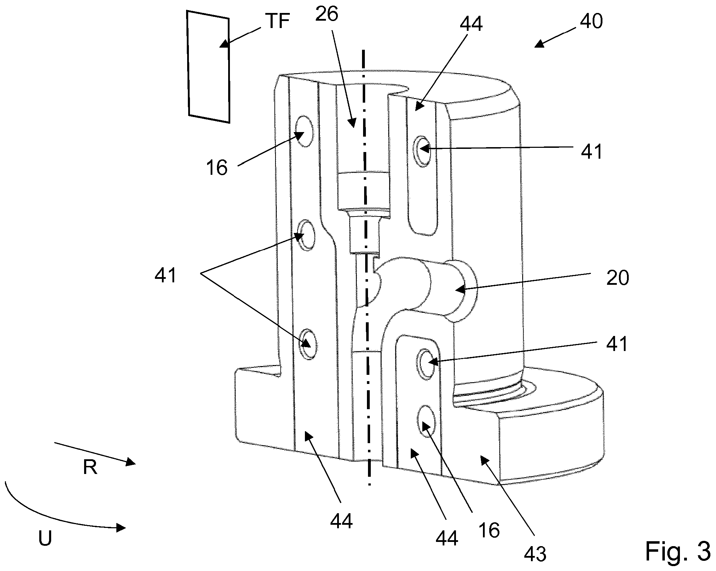

Figur 3 zeigt die zweite Körperhälfte 40, mit dem entlang der Trennfläche TF aufgetrennten Umlenkkanal 20, und der aufgetrennten Verschlussnadeldurchführung 26. Die zweite Körperhälfte 40 weist eine parallel zur Trennfläche TF verlaufende zweite Oberfläche 43 auf, in die zweite Einsenkungen 44 eingebracht sind. Die zweiten Einsenkungen 44 liegen in Bereichen, in denen von der zweiten Oberfläche 43 aus gesehen, die Sacklöcher 41 und das Zentrierloch 16 in die zweite Körperhälfte 40 eingebracht sind. Die zweiten Einsenkungen 44 umfassen Bereiche, die weder die Ränder des Umlenkkanals 20 oder der Verschlussnadeldurchführung 26 schneiden. Zwischen den zweiten Einsenkungen 44 und dem Umlenkkanal 20 und der Verschlussnadeldurchführung 26 ist somit ein, gegenüber den zweiten Einsenkungen 44, erhöhter Bereich der zweiten Oberfläche 43 vorhanden.

Durch die Einsenkungen 34, 44 und die damit verbundene Reduzierung der Oberflächen 33, 43 der beiden Körperhälften 30, 40 wird bei der Herstellung der die beiden Körperhälften 30, 40 verbindenden Verbindung der Anpressdruck erhöht.

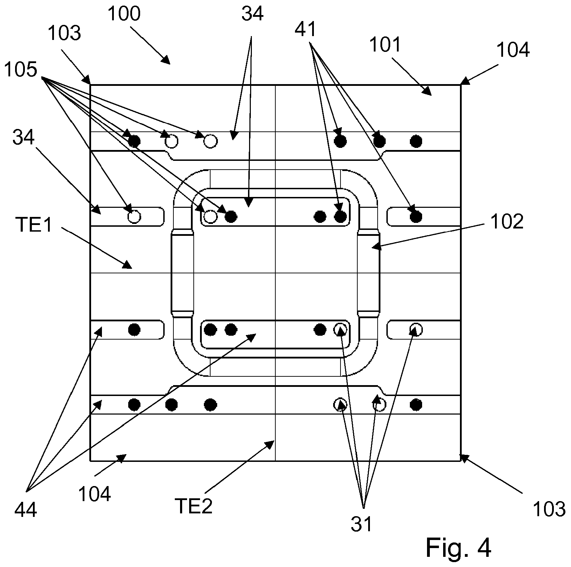

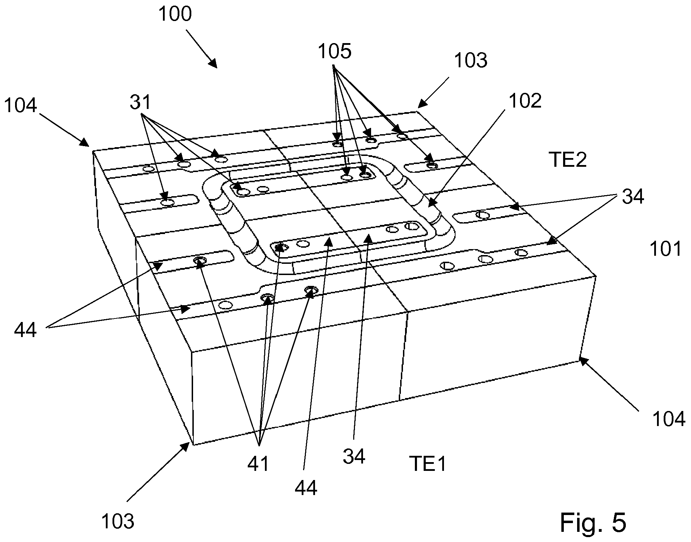

Figur 4 und Figur 5 zeigen den Rohling 100 mit der Bearbeitungsfläche 101 zur Durchführung des Verfahrens zur Herstellung der Umlenkvorrichtung 1. Der Rohling ist in dieser Ausführungsform als Quader ausgebildet, wobei die Bearbeitungsfläche 101 im Wesentlichen quadratisch ist. Die Seiten der quadratischen Bearbeitungsfläche 101 werden von einer ersten Trennebene TE1 und einer zweiten Trennebene TE2 etwa hälftig geschnitten, wobei die Trennebenen TE1, TE2 senkrecht zueinander und senkrecht zu der Bearbeitungsfläche 101 ausgerichtet sind. In die Bearbeitungsfläche 101 werden als Bearbeitungen eine Umlenkkanalstruktur 102, Einsenkungen 34, 44 und Bohrungen 105 eingebracht. Die Bohrungen 105 sind als Durchgangslöcher 31 und als Sacklöcher 41 ausgebildet. Die Umlenkkanalstruktur 102, die Einsenkungen 34, 44 und die Bohrungen 105 werden derart in die Bearbeitungsfläche 101 eingebracht, dass sie eine Symmetrie aufweisen, wobei die Trennebene TE1 und die Trennebene TE2 als Drehspiegelsymmetrieebenen wirken. Somit werden durch die Auftrennung des Rohlings 100 entlang der Trennebenen TE1 und TE2 zwei Paare von einem ersten Rohlingsteilstück 103 und einem zweiten Rohlingsteilstück 104 erzeugt, die eine spiegelbildlich ausgeprägte Bearbeitung der Bearbeitungsfläche 101 aufweisen. Durch die spiegelbildlich ausgeprägte Bearbeitung der Bearbeitungsflächen 101 sind die ersten Rohlingsteilstücke 103 und zweiten Rohlingsteilstücke 104 mit den Bearbeitungsflächen 101 zueinander anordenbar, sodass die Bearbeitungen direkt übereinanderliegen. Dadurch, dass die Bearbeitungen an dem Rohling 100 erfolgen, können die Rohlingsteilstücke 103, 104 hinsichtlich ihrer Bearbeitungen exakt in Überdeckung gebracht werden.

Zur Herstellung der den Grundkörper 10 bildenden ersten Körperhälfte 30 und zweiten Körperhälfte 40 wird das erste Rohlingsteilstück 103 und das zweite Rohlingsteilstück 104 an den Seiten, die der Bearbeitungsfläche 101 abgewandt sind, in einem weiteren Verfahrensschritt bearbeitet, sodass sie die entsprechende Geometrie des Grundkörpers 10 aufweisen. Hierfür dienen die Durchgangslöcher 31 die Sacklöcher 41 als Eingriffspositionen für Zentrierstifte 17 und Werkzeuge, sodass die Rohlingsteilstücke 103, 104 zur weiteren Bearbeitung ausrichtbar und fixierbar sind.

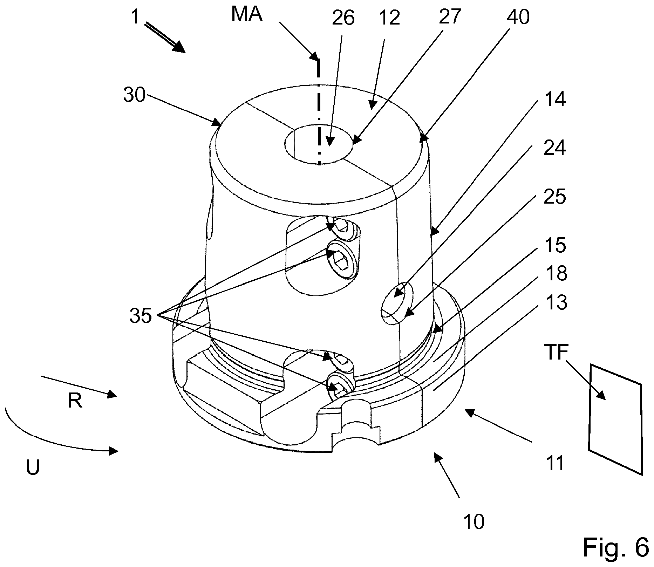

Figur 6 zeigt eine weitere Ausgestaltung der Umlenkvorrichtung 1 mit einem konischen Grundkörper 10. Es ist zu erkennen, dass der Durchmesser des Grundkörpers 10 von der ersten Seite 11 her in einer Richtung parallel zur Mittelachse MA entgegen der zweiten Seite 12 abnimmt. Der Grundkörper 10 weist also eine zulaufende Konizität in Richtung der zweiten Seite 12 auf.

Diese Umlenkvorrichtung 1 weist ebenfalls, wie die Ausführungsform nach den Figuren 1 bis 3 eine erste Seite 11 und eine zweite Seite 12 auf. Der konische Grundkörper 10 ist in dieser Ausführungsform von der ersten Seite 11 zur zweiten Seite 12 hinzulaufend. Weiterhin weist die Umlenkvorrichtung 1 an der ersten Seite 11 einen Flansch 13 auf. Im Übergangsbereich zwischen Flansch 13 mit der Anschlagfläche 18 und Grundkörper 10 ist eine Nut 14 angeordnet, die in die Außenseite 14 der Umlenkvorrichtung 1 hineinragt. Senkrecht zu der Mittelachse MA verläuft eine Verschlussnadeldurchführung 26, die in der dritten Öffnung 27 auf der zweiten Seite 12 mündet.

Die Umlenkvorrichtung 1 ist in eine erste Körperhälfte 30 und in eine zweite Körperhälfte 40 geteilt. Die Körperhälften 30, 40 sind an einer Trennfläche TF zusammengefügt. Die Trennfläche TF verläuft parallel zu der Mittelachse MA der Umlenkvorrichtung 1.

Ein radialer Abschnitt 24 eines Umlenkkanals, der in den Körperhälften 30, 40 entlang der Trennfläche TF verläuft, weist einen radialen Abschnitt 24 auf, der in der zweiten Öffnung 25 an der Außenseite 14 der Umlenkvorrichtung 1 mündet.

Die Körperhälften 30, 40 werden von Schraubbolzen mit Schraubenköpfen 35 zusammengehalten, solange die Umlenkvorrichtung 1 nicht in der Verteilerplatte montiert ist.

In einer speziellen Ausgestaltung weist der Grundkörper 10 ein Material auf, das einen ähnlichen Wärmeausdehnungskoeffizienten, bevorzugt denselben Wärmeausdehnungskoeffizienten, als das Material der Verteilerplatte hat. Dadurch ist der Grundkörper 10 leicht austauschbar. Sofern der Grundkörper 10 mit Übermaß hergestellt wird, ist der Grundkörper 10 in die Verteilerplatte einsetzbar, wenn er eine geringere Temperatur, als die Temperatur der Verteilerplatte aufweist. Bei Ausgleich der Temperaturen entsteht eine Presspassung zwischen dem Grundkörper 10 und der Verteilerplatte, die durch die Herstellung einer entsprechenden Temperaturdifferenz lösbar ist.

In einer weiteren Ausgestaltung weist der Grundkörper 10 ein Material auf, das einen größeren Wärmeausdehnungskoeffizienten als das Material der Verteilerplatte hat. In diesem Fall wird eine Presspassung zwischen dem Grundkörper 10 und der Verteilerplatte hergestellt, wenn die Spritzgussanlage auf Betriebstemperatur ist.

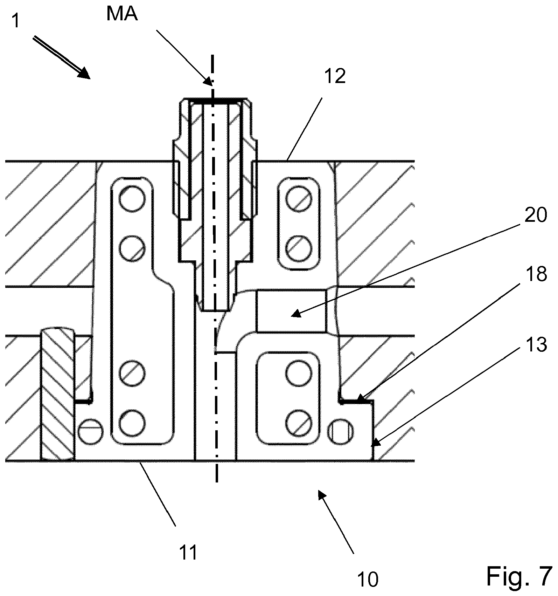

Figur 7 zeigt eine schematische, geschnittene Ansicht der in eine Verteilerplatte eingesetzten konischen Ausführungsform der Umlenkvorrichtung 1. Der Grundkörper 10 ist in die Verteilerplatte eingesetzt und schließt mit der ersten Seite 11 und der zweiten Seite 12 relativ zur der den Grundkörper 10 umgebenden Verteilerplatte bündig ab. Die Verteilerplatte weist eine radiale Aussparung in dem Einsatzbereich der Umlenkvorrichtung 1 auf, in die der Flansch 13 einliegt. Die radiale Aussparung weist einen Anschlag auf, an den die Anschlagfläche 18 des Flansches 13 anliegt. Somit ist die Umlenkvorrichtung 1 parallel zu der Mittelachse MA in eine Richtung festgelegt. Auf vorteilhafte Weise ist so erreichbar, dass der Umlenkkanal 20 mit einem in der Verteilerplatte vorhandenen Kanal in Überdeckung bringbar ist. Zudem ist die Umlenkvorrichtung 1 so auf ein definiertes Maß in die Verteilerplatte einpressbar.

Die Erfindung ist nicht auf eine der vorbeschriebenen Ausführungsformen beschränkt, sondern in vielfältiger Weise abwandelbar. Man erkennt, dass eine Umlenkvorrichtung 1 zur Umlenkung eines Schmelzeflusses in einer Verteilerplatte einer Spritzgussanlage einen Grundkörper 10 hat, wobei innerhalb des Grundkörpers ein Umlenkkanal 20 angeordnet ist. Um eine verbesserte Lösung zum Umleiten des Schmelzeflusses in einem Heißkanalverteiler zu schaffen, sieht die Erfindung vor, dass der Grundkörper 10 eine Trennfläche TF aufweist, die den Grundkörper 10 in eine erste Körperhälfte 30 und in eine zweite Körperhälfte 40 aufteilt, wobei die erste Körperhälfte 30 und die zweite Körperhälfte 40 fest miteinander verbindbar sind.

Die Erfindung betrifft weiterhin ein Verfahren zur Herstellung der Umlenkvorrichtung, wobei in einer Bearbeitungsfläche 101 eines Rohlings 100 eine Umlenkkanalstruktur 102 eingearbeitet wird. Anschließend wird die Bearbeitungsfläche 101 planiert, d.h. eben geschliffen oder poliert, und der Rohling 100 entlang mindestens einer Trennungsebene TE1, TE2 in mindestens ein erstes Rohlingsteilstück 103 und mindestens ein zweites Rohlingsteilstück 104 geteilt. Im Anschluss daran werden die Rohlingsteilstücke 103, 104 derart zu einer Umlenkvorrichtung 1 zusammengesetzt, dass sich die in den Rohlingsteilstücken 103, 104 ausgebildeten Umlenkkanalstrukturen 102 zu einem Umlenkkanal 20 ergänzen und dass die Rohlingsteilstücke 103, 104 den Grundkörpers 10 bilden. Danach werden zur Herstellung der Außenseite 14 die Rohlingsteilstücke 103, 104, welche die Körperhälften 30, 40 bilden, an den Seiten, die der Bearbeitungsfläche 101 abgewandt sind, bearbeitet.

**Bezugszeichenliste**

| | | | |
|---|---|---|---|
| 1 | Umlenkvorrichtung | 33 | Erste Oberfläche |
| 10 | Grundkörper | 34 | Erste Einsenkung |
| 11 | Erste Seite | 35 | Schraubenkopf |
| 12 | Zweite Seite | 40 | Zweite Körperhälfte |
| 13 | Flansch | 41 | Sackloch |
| 14 | Außenseite | 42 | Innengewinde |
| 15 | Nut | 43 | Zweite Oberfläche |
| 16 | Zentrierloch | 44 | Zweite Einsenkung |
| 17 | Zentrierstift | 100 | Rohling |
| 18 | Anschlagfläche | 101 | Bearbeitungsfläche |
| 20 | Umlenkkanal | 102 | Umlenkkanalstruktur |
| 21 | Vertikaler Abschnitt | 103 | Erstes Rohlingsteilstück |
| 22 | Erste Öffnung | 104 | Zweites Rohlingsteilstück |
| 23 | Kurvenabschnitt | 105 | Bohrungen |
| 24 | Radialer Abschnitt | | |
| 25 | Zweite Öffnung | U | Umfangsrichtung |
| 26 | Verschlussnadeldurchführung | MA | Mittelachse |
| 27 | Dritte Öffnung | TF | Trennfläche |
| 28 | Anschlussgeometrie | R | Radiale Richtung |
| 30 | Erste Körperhälfte | TE1 | Erste Trennungsebene |
| 31 | Durchgangsloch | TE2 | Zweite Trennungsebene |
| 32 | Schraubbolzen | | |

## Patentansprüche

1. Umlenkvorrichtung (1), zur Umlenkung eines Schmelzeflusses in einer Verteilerplatte einer Spritzgussanlage, mit einem Grundkörper (10), wobei innerhalb des Grundkörpers ein Umlenkkanal (20) angeordnet ist, wobei der Grundkörper (10) eine Trennfläche (TF) aufweist, die den Grundkörper (10) in eine erste Körperhälfte (30) und in eine zweite Körperhälfte (40) aufteilt, wobei die erste Körperhälfte (30) und die zweite Körperhälfte (40) fest miteinander verbindbar sind, **dadurch gekennzeichnet, dass** die Körperhälften (30, 40) parallel zur Trennfläche (TF) liegende Oberflächen (33, 43) aufweisen, wobei in die Oberflächen (33, 43) jeweils mindestens eine Einsenkung (34, 44) eingebracht ist, und dass von der Trennfläche (TF) aus gesehen, die erste Körperhälfte (30) Durchgangslöcher (31) aufweist und die zweite Körperhälfte (40) Sacklöcher (41) aufweist, wobei die Durchgangslöcher (31) und die Sacklöcher (41) im Bereich der Einsenkungen (34, 44) liegen.

2. Umlenkvorrichtung (1) nach Anspruch 1, **dadurch gekennzeichnet, dass** der Umlenkkanal (20) in der Trennfläche (TF) verläuft.

3. Umlenkvorrichtung (1) nach einem der vorhergehenden Ansprüche, **dadurch gekennzeichnet, dass** eine Mittelachse (MA) des Grundkörpers (10) in der Trennfläche (TF) liegt.

4. Umlenkvorrichtung (1) nach einem der vorhergehenden Ansprüche, **dadurch gekennzeichnet, dass** der Grundkörper (10) an einer ersten Seite (11) einen Flansch (13) aufweist und der Flansch (13) eine Anschlagfläche (18) zur Anlage der Umlenkvorrichtung (1) an einer Verteilerplatte aufweist.

5. Umlenkvorrichtung (1) nach einem der vorhergehenden Ansprüche, **dadurch gekennzeichnet, dass** der Umlenkkanal (20) einen vertikalen Abschnitt (21) aufweist, der im Wesentlichen parallel zu der Mittelachse (MA) verläuft und der Umlenkkanal (20) einen radialen Abschnitt (24) aufweist, der im Wesentlichen senkrecht zu der Mittelachse (MA) verläuft.

6. Umlenkvorrichtung (1) nach Anspruch 5, **dadurch gekennzeichnet, dass** der Umlenkkanal (20) zwischen dem vertikalen Abschnitt (21) und dem radialen Abschnitt (24) einen Kurvenabschnitt (23) aufweist.

7. Umlenkvorrichtung (1) nach einem der vorhergehenden Ansprüche, **dadurch gekennzeichnet, dass** eine Verschlussnadeldurchführung (26) konzentrisch zu der Mittelachse (MA) des Grundkörpers (10) verläuft und mit dem vertikalen Abschnitt (21) des Umlenkkanals (20) verbunden ist.

8. Umlenkvorrichtung (1) nach einem der vorhergehenden Ansprüche, **dadurch gekennzeichnet, dass** der Grundkörper (10) eine zylindrische Form aufweist.

9. Umlenkvorrichtung (1) nach einem der Ansprüche 1 bis 7, **dadurch gekennzeichnet, dass** der Grundkörper (10) eine konische Form aufweist.

10. Umlenkvorrichtung (1) nach einem der vorhergehenden Ansprüche, **dadurch gekennzeichnet, dass** der Grundkörper (10) ein Material aufweist, das einen positiven Wärmeausdehnungskoeffizienten hat.

11. Umlenkvorrichtung (1) nach einem der vorhergehenden Ansprüche, **dadurch gekennzeichnet, dass** der Grundkörper (10) und die Verteilerplatte jeweils ein Material aufweisen, das einen ähnlichen Wärmeausdehnungskoeffizienten hat.

12. Umlenkvorrichtung (1) nach einem der Ansprüche 1 bis 11, **dadurch gekennzeichnet, dass** der Wärmeausdehnungskoeffizient des Materials des Grundkörpers (10) größer ist, als der Wärmeausdehnungskoeffizient des Materials der Verteilerplatte.

13. Verfahren zur Herstellung mindestens einer Umlenkvorrichtung (1) nach Anspruch 1 aufweisend die folgenden Verfahrensschritte zur Bearbeitung eines Rohlings (100) mit einer Bearbeitungsfläche (101):
∘ Einbringen einer Umlenkkanalstruktur (102) in die Bearbeitungsfläche (101) des Rohlings (100);
∘ Planieren der Bearbeitungsfläche (101);
∘ Teilen des Rohlings (100) entlang mindestens einer Trennungsebene (TE1, TE2) in mindestens ein erstes Rohlingsteilstück (103) und mindestens ein zweites Rohlingsteilstück (104);
∘ Bearbeiten der Rohlingsteilstücke (103, 104) zur Herstellung der Außenseite (14) des die Körperhälften (30, 40) aufweisenden Grundkörpers (10) an den Seiten, die der Bearbeitungsfläche (101) abgewandt sind.

14. Verfahren nach Anspruch 13, **dadurch gekennzeichnet, dass** die Umlenkkanalstruktur (102) entlang mindestens einer Trennungsebene (TE1, TE2), die senkrecht zu der Bearbeitungsfläche (101) steht, spiegelsymmetrisch in die Bearbeitungsfläche (101) des Rohlings (100) eingebracht wird.

15. Verfahren nach Anspruch 14, **dadurch gekennzeichnet, dass** die Umlenkkanalstruktur (102) derart in die Bearbeitungsfläche (101) des Rohlings (100) eingebracht wird, dass sie entlang einer zweiten Trennungsebene (TE2), die eine Drehspiegelebene ist und senkrecht auf der ersten Trennungsebene (TE1) steht, drehspiegelsymmetrisch

## Claims

1. Deflection device (1) for the deflection of a melt flow within a distribution plate of an injection moulding apparatus, having a basic body (10), wherein within the basic body is arranged a deflection duct (20), wherein the basic body (10) has a separation surface (TF) which divides the basic body (10) into a first body half (30) and into a second body half (40), wherein the first body half (30) and the second body half (40) can be connected securely to one another, **characterised in that** the body halves (30, 40) have surfaces (33, 43) situated parallel to the separation surface (TF), wherein in each case at least one recess (34, 44) is introduced into the surfaces (33, 43), and that viewed from the separation surface (TF) the first body half (30) has through holes (31) and the second body half (40) has blind holes (41), wherein the through holes (31) and the blind holes (41) are situated in the region of the recesses (34, 44).

2. Deflection device (1) according to claim 1, **characterised in that** the deflection duct (20) runs in the separation surface (TF).

3. Deflection device (1) according to any of the preceding claims, **characterised in that** a central axis (MA) of the basic body (10) lies in the separation surface (TF).

4. Deflection device (1) according to any of the preceding claims, **characterised in that** the basic body (10) has on a first side (11) a flange (13) and the flange (13) has an abutment surface (18) for attaching the deflection device (1) on a distribution plate.

5. Deflection device (1) according to any of the preceding claims, **characterised in that** the deflection duct (20) has a vertical portion (21) which runs substantially parallel to the central axis (MA) and the deflection duct (20) has a radial portion (24) which runs substantially perpendicularly to the central axis (MA).

6. Deflection device (1) according to claim 5, **characterised in that** the deflection duct (20) has a curved portion (23) between the vertical portion (21) and radial portion (24).

7. Deflection device (1) according to any of the preceding claims, **characterised in that** a shut-off needle feed-through (26) runs concentrically to the central axis (MA) of the basic body (10) and is connected with the vertical portion (21) of the deflection duct (20).

8. Deflection device (1) according to any of the preceding claims, **characterised in that** the basic body (10) has a cylindrical shape.

9. Deflection device (1) according to any of claims 1 to 7, **characterised in that** the basic body (10) has a conical shape.

10. Deflection device (1) according to any of the preceding claims, **characterised in that** the basic body (10) has a material which has a positive thermal expansion coefficient.

11. Deflection device (1) according to any of the preceding claims, **characterised in that** the basic body (10) and the distribution plate have in each case a material which has a similar thermal expansion coefficient.

12. Deflection device (1) according to any of claims 1 to 11, **characterised in that** the thermal expansion coefficient of the material of the basic body (10) is greater than the thermal expansion coefficient of the material of the distribution plate.

13. Method for producing at least one deflection device (1) according to claim 1, having the following method steps for processing a blank (100) having a processing surface (101):
- introduction of a deflection duct structure (102) in the processing surface (101) of the blank (100);
- planing of the processing surface (101);
- dividing the blank (100) along at least one separation plane (TE1, TE2) into at least one first blank partial piece (103) and at least one second blank partial piece (104);
- processing the blank partial pieces (103, 104) for producing the outer side (14) of the basic body (10) having the body halves (30, 40) at the sides which are averted from the processing surface (101).

14. Method according to claim 13, **characterised in that** the deflection duct structure (102) is introduced along at least one separation plane (TE1, TE2), which stands perpendicularly to the processing surface (101), in a mirror-symmetrical manner into the processing surface (101) of the blank (100).

15. Method according to claim 14, **characterised in that** the deflection duct structure (102) is introduced into the processing surface (101) of the blank (100) such that it rotationally mirror symmetrically along a second separation plane (TE2), which is a rotational mirror plane and stands perpendicularly on the first separation plane (TE1).

## Revendications

1. Dispositif de déviation (1) permettant de dévier un écoulement de matière fondue au sein d'une plaque de distribution d'une installation de moulage par injection, avec un corps de base (10), dans lequel un canal de déviation (20) est agencé à l'intérieur du corps de base, dans lequel le corps de base (10) présente une surface de séparation (TF) qui divise le corps de base (10) en une première moitié de corps (30) et une seconde moitié de corps (40), dans lequel la première moitié de corps (30) et la seconde moitié de corps (40) peuvent être reliées l'une à l'autre de manière fixe, **caractérisé en ce que** les moitiés de corps (30, 40) présentent des surfaces (33, 43) se situant parallèlement à la surface de séparation (TF), dans lequel respectivement au moins un affaissement (34, 44) est mis en place au sein des surfaces (33, 43), et **en ce que**, considérées depuis la surface de séparation (TF), la première moitié de corps (30) présente des trous traversants (31) et la seconde moitié de corps (40) présente des trous borgnes (41), dans lequel les trous traversants (31) et les trous borgnes (41) se situent dans la région des affaissements (34, 44).

2. Dispositif de déviation (1) selon la revendication 1, **caractérisé en ce que** le canal de déviation (20) s'étend au sein de la surface de séparation (TF).

3. Dispositif de déviation (1) selon l'une quelconque des revendications précédentes, **caractérisé en ce qu'**un axe central (MA) du corps de base (10) se situe au sein de la surface de séparation (TF).

4. Dispositif de déviation (1) selon l'une quelconque des revendications précédentes, **caractérisé en ce que** le corps de base (10) présente une bride (13) sur un premier côté (11) et la bride (13) présente une surface de butée (18) permettant une installation du dispositif de déviation (1) au niveau d'une plaque de distribution.

5. Dispositif de déviation (1) selon l'une quelconque des revendications précédentes, **caractérisé en ce que** le canal de déviation (20) présente une section verticale (21) qui s'étend de manière essentiellement parallèle à l'axe central (MA) et le canal de déviation (20) présente une section radiale (24) qui s'étend de manière essentiellement perpendiculaire à l'axe central (MA).

6. Dispositif de déviation (1) selon la revendication 5, **caractérisé en ce que** le canal de déviation (20) présente une section courbe (23) entre la section verticale (21) et la section radiale (24).

7. Dispositif de déviation (1) selon l'une quelconque des revendications précédentes, **caractérisé en ce qu'**un passage pour aiguille d'obturation (26) s'étend de manière concentrique à l'axe central (MA) du corps de base (10) et est relié à la section verticale (21) du canal de déviation (20).

8. Dispositif déflecteur (1) selon l'une quelconque des revendications précédentes, **caractérisé en ce que** le corps de base (10) présente une forme cylindrique.

9. Dispositif de déviation (1) selon l'une quelconque des revendications 1 à 7, **caractérisé en ce que** le corps de base (10) présente une forme conique.

10. Dispositif de déviation (1) selon l'une quelconque des revendications précédentes, **caractérisé en ce que** le corps de base (10) présente un matériau à coefficient de dilatation thermique positif.

11. Dispositif de déviation (1) selon l'une quelconque des revendications précédentes, **caractérisé en ce que** le corps de base (10) et la plaque de distribution présentent respectivement un matériau à coefficient de dilatation thermique similaire.

12. Dispositif de déviation (1) selon l'une quelconque des revendications 1 à 11, **caractérisé en ce que** le coefficient de dilatation thermique du matériau du corps de base (10) est supérieur au coefficient de dilatation thermique du matériau de la plaque de distribution.

13. Procédé de fabrication d'au moins un dispositif de déviation (1) selon la revendication 1, comprenant les étapes de procédé ci-dessous permettant d'usiner une ébauche (100) avec une surface d'usinage (101) et consistant à :
∘ mettre en place une structure de canal de déviation (102) dans la surface d'usinage (101) de l'ébauche (100) ;
∘ aplanir la surface d'usinage (101) ;
∘ diviser l'ébauche (100) en au moins une première partie d'ébauche (103) et au moins une seconde partie d'ébauche (104) le long d'au moins un plan de séparation (TE1, TE2) ;
∘ usiner les parties d'ébauche (103, 104) afin de créer le côté extérieur (14) du corps de base (10) présentant les moitiés de corps (30, 40), sur les côtés opposés à la surface d'usinage (101).

14. Procédé selon la revendication 13, **caractérisé en ce que** la structure de canal de déviation (102) est mise en place avec une symétrie de réflexion au sein de la surface d'usinage (101) de l'ébauche (100) le long d'au moins un plan de séparation (TE1, TE2) perpendiculaire à la surface d'usinage (101).

15. Procédé selon la revendication 14, **caractérisé en ce que** la structure de canal de déviation (102) est mise en place au sein de la surface d'usinage (101) de l'ébauche (100) de telle manière qu'elle une symétrie de rotation-réflexion le long d'un second plan de séparation (TE2) qui est un plan de rotation-réflexion et est perpendiculaire au premier plan de séparation (TE1).
